# EUROPÄISCHE PATENTSCHRIFT

(11) **EP 2 348 221 B1**
(45) Veröffentlichungstag und Bekanntmachung des Hinweises auf die Patenterteilung: **24.10.2012**
(21) Anmeldenummer: 10000705.3
(22) Anmeldetag: 25.01.2010
(51) Int. Cl.: F04D 29/041, F16C 17/04, F16C 23/04, H02K 5/167, F16C 17/06

(54) **Kreiselpumpenaggregat**
Centrifugal pump assembly
Agrégat de pompe centrifuge

(43) Veröffentlichungstag der Anmeldung: 27.07.2011
(73) Patentinhaber: Grundfos Management A/S, 8850 Bjerringbro (DK)
(72) Erfinder: Rasmussen, Bjarne Dindler, 8830 Tjele (DK); Mønste, Peter, 8900 Randers (DK); Danielsen, Carl-Christian, 8550 Ryomgård (DK)
(74) Vertreter: Hemmer, Arnd

(56) Entgegenhaltungen:
- EP-A1- 2 096 737
- US-A- 3 326 612

## Beschreibung

Die Erfindung betrifft ein Kreiselpumpenaggregat gemäß dem Oberbegriff des Anspruchs 1.

Kreiselpumpenaggregate weisen überlicherweise einen elektrischen Antriebsmotor und eine daran angesetzte Kreiselpumpe, welche ein - oder mehrstufig ausgebildet sein kann, auf. Das oder die Laufräder der Kreiselpumpe sind auf einer mit dem Antriebsmotor verbundenen Welle angeordnet. Auf die Welle wirkt im Betrieb des Kreiselpumpenaggregates aufgrund der Reaktionskraft des geförderten Fluids eine Axialkraft, welche von einem Axiallager aufgenommen werden muss. Dabei gibt es mehrere Möglichkeiten ein solches Axiallager anzuordnen. Das Axiallager kann am Ende der Welle oder aber auch im Mittelbereich der Welle angeordnet werden, was bei bestimmten Pumpen von Vorteil ist. Bei der Anordnung im Mittelbereich stellt sich das Problem, dass es aufgrund von Auslenkungen oder Verformungen der Welle zu Ausrichtungsungenauigkeiten zwischen dem feststehenden und dem sich bewegenden Lagerteil des Axiallagers kommen kann, was dann zu erhöhten Reibungsverlusten und ggf. erhöhtem Verschleiß führt. Um dies zu vermeiden ist eine aufwendige Ausrichtung von Welle und Lagerteilen erforderlich, welche aber auch nicht immer einwandfrei möglich ist.

US 3,326,612 offenbart ein Pumpenaggregat mit einem Axiallager dessen feststehende Lagerteile kardanisch aufgehängt sind und dessen rotierende Lagerteile sich in axialer Richtung verschieben können. Diese Anordnung weist einen komplizierten Aufbau auf, welcher nicht bei jeder Einbaulage realisiert werden kann.

Aus EP 2 096 737 A1 ist ein Pumpenaggregat bekannt, welches ein Axiallager aufweist, dessen feststehender Lagerteil zur Selbstausrichtung auf einer sphärischen Oberfläche gelagert ist und darüber hinaus einzeln bewegliche Lagerschuhe aufweist. Auch diese Anordnung weist eine gewisse Baugrößeauf, welche die Verwendung nicht in jeder Einbaulage des Axiallagers zulässt. Darüber hinaus können Auslenkungen und Verformungen der Welle nur zu einem bestimmten Maß ausgeglichen werden.

Im Hinblick auf diese Problematik ist es Aufgabe der Erfindung, ein Kreiselpumpenaggregat bereitzustellen, bei welchem auch bei schwieriger Einbaulage eine zuverlässige Funktion des Axiallagers sichergestellt werden kann.

Diese Aufgabe wird durch ein Kreiselpumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Kreiselpumpenaggregat weist in bekannter Weise zumindest ein Laufrad und ein Axiallager auf, welches die von dem Laufrad im Betrieb erzeugten axialen Reaktionskräfte aufnimmt. Dieses Axiallager kann beispielsweise an einer das Laufrad antreibenden Welle angeordnet sein. Das Axiallager besteht aus einem rotierenden und einem feststehenden Lagerteil, wobei im Betrieb die Axialkräfte von dem rotierenden Lagerteil auf den feststehende Lagerteil übertragen werden und der feststehende Lagerteil sich seinerseits beispielsweise am Gehäuse der Pumpe oder des Antriebsmotors abstützt.

Erfindungsgemäß sind sowohl der rotierende als auch der feststehenden Lagerteil selbstausrichtend ausgebildet. Das heißt feststehender und rotierender Lagerteil sind so ausgebildet, dass sich ihre Lagerflächen zueinander so ausrichten können, dass sie sich parallel zueinander erstrecken und beispielsweise direkt miteinander in Anlage kommen können, um nach Art eines Gleitlagers aufeinander zu gleiten. Dadurch, dass sowohl der rotierende als auch der feststehende Lagerteil und nicht nur einer der Lagerteile selbstausrichtend ausgebildet ist, ist auch bei Lagefehlern oder Ausrenkungen der Welle eine zuverlässige Lagerung möglich, da die Lagerflächen der beiden Lagerteile stets eine zueinander parallele Winkellage einnehmen können, in welcher sie zuverlässig aufeinander gleiten. Ein Taumeln eines der Lagerteile wird so verhindert.

Erfindungsgemäß ist eine Lagerfläche jedes Lagerteils zur Ausrichtung in ihrer Winkellage zur Rotationsachse der Antriebswelle in zumindest einem begrenzten Winkelbereich frei schwenkbar. Hierdurch wird die Selbstausrichtung gewährleistet, d.h. die Lagerfläche kann in ihrer Winkellage bezüglich der Rotationsachse verschwenken und sich im Winkel so ausrichten, dass sie plan an der gegenüberliegenden Lagerfläche des anderen Lagerteils zur Anlage kommt. Somit kann ein Taumeln im Betrieb verhindert werden.

Bevorzugt eignet sich ein solches Axiallager für eine Anordnung in der Mitte der Welle. So ist bevorzugt das Axiallager an einer Antriebswelle beabstandet von den axialen Enden der Antriebswelle angeordnet, insbesondere ist es näher zur axialen Mitte der Antriebswelle als zu den axialen Enden hin gelegen. Das heißt bei dieser Ausführungsform liegt das Axiallager im dem Bereich der Antriebswelle, in welchem es zu geringfügigen radialen Auslenkungen der Welle und Lagefehlern der Welle kommen kann, mehr als an deren axialen Enden, wo die Welle üblicherweise radial gelagert ist. Die Anordnung des Axiallagers in diesem Bereich hat üblicherweise das Problem zur Folge, dass die Lagerteile zu taumeln anfangen, was eine erhöhte Reibung und einen erhöhten Verschleiß bedingt. Durch die erfindungsgemäße selbstausrichtende Ausgestaltung der beiden Lagerteile wird dies vermieden und auch bei einer Anordnung des Axiallagers in diesem Mittelbereich der Welle ein reibungs- und verschleißarmer Lauf gewährleistet.

Auf der Antriebswelle ist bevorzugt ein Rotor eines elektrischen Antriebsmotors und zumindest ein Laufrad angeordnet, wobei das Axiallager in axialer Richtung zwischen dem Rotor und dem zumindest einen Laufrad gelegen ist. Dabei kann die Antriebswelle als durchgehende, einteilige Antriebswelle ausgebildet sein, jedoch auch mehrteilig, beispielsweise in Form einer Motorwelle und einer Pumpenwelle ausgebildet sein, welche drehfest miteinander verbunden sind. Bevorzugt ist das Axiallager somit an dem dem Antriebsmotor zugewandten Axialende der Kreiselpumpe angeordnet.

Weiter bevorzugt ist das Axiallager an der Druckseite des zumindest einen Laufrades oder einer Anordnung mehrerer Laufräder, im Falle einer mehrstufigen Kreiselpumpe, angeordnet. Die Druckseite ist diejenige Seite des Laufrades, an welcher das zu fördernde Medium einen höheren Druck aufweist. Das heißt bevorzugt wird das Axiallager im Bereich der Pumpe angeordnet, in welchem der höchste Fluiddruck herrscht. Dies hat den Vorteil, dass in diesem Bereich eine ausreichende Schmierung des Axiallagers durch das Fluid gewährleistet werden kann. Dies gilt insbesondere bei der Förderung von Fluiden bzw. Flüssigkeiten, welche dazu neigen, bei Erwärmung und/oder geringerem Druck zu verdampfen. Durch Anordnung im Bereich des höchsten Druckes wird gewährleistet, währleistet, dass in diesem Bereich das zu fördernde Fluid im flüssigen Aggregatzustand vortiegt und so für eine ausreichende Schmierung des Axiallagers sorgen kann. Dies ist insbesondere dann von Bedeutung, wenn das zu fördernde Fluid beispielsweise ein Kältemittel ist, welches bereits bei geringeren Temperaturen verdampft. Bevorzugt liegt der Bereich des höchsten Druckes der Kreiselpumpe an dem dem Antriebsmotor zugewandten Axialende der Kreiselpumpe. Das heißt die Saugseite der Pumpe ist in axialer Richtung vom Antriebsmotor beabstandet. Das Axiallager liegt dabei vorzugsweise vor dem Antriebsmotor, so dass das zu fördernde Fluid in diesem Bereich im Wesentlichen noch nicht durch die Abwärme des Antriebsmotors erwärmt wird. Im Idealfall liegt das Axiallager somit in einem Bereich eines hohen Druckes und geringer Temperatur des zu fördernden Fluids, so dass in diesem Bereich sichergestellt ist, dass das Fluid nicht verdampft und in flüssiger Form das Lager schmieren kann.

Wie oben beschrieben ist das Axiallager vorzugsweise als Gleitlager ausgebildet und wird durch das zu fördernde Fluid bzw. die zu fördernde Flüssigkeit geschmiert.

Dazu ist weiter bevorzugt die Lagerfläche zumindest eines Lagerteils zur Ausrichtung in ihrer Winkellage um zwei zueinander rechtwinklige und sich normal zur Rotationsachse der Antriebswelle erstreckenden Achsen schwenkbar. Das heißt dies stellt im Wesentlichen eine Verschwenkung auf einer Kugelebene dar, deren Mittelpunkt auf der Rotationsachse liegt. So kann sich die Lagerfläche frei in allen Richtungen in ihrer Winkellage ausrichten.

Bevorzugt ist die Lagerfläche zumindest eines Lagerteils an einem Träger angebracht oder abgestützt, welcher eine der Lagerfläche abgewandte sphärische Anlagefläche aufweist, welche gleitend an einer korrespondierenden konischen Gegenanlagefläche anliegt. Dabei ist die sphärische Anlagefläche vorzugsweise konvex gewölbt und die konische Gegenanlagefläche entsprechend konkav ausgebildet. Dabei ist die Gegenanlagefläche bevorzugt im selben Radius konkav gewölbt, d.h. sphärisch ausgebildet, so dass die Flächen aneinander flächig zur Anlage kommen. Anlagefläche und Gegenanlagefläche bilden somit Teile einer Kugeloberfläche und ermöglichen die vorangehend beschriebene Verschwenkung der Lagerfläche in ihrer Winkellage relativ zur Rotationsachse. Die konische Gegenanlagefläche muss nicht zwingend sphärisch ausgebildet sein, stattdessen könnte sie auch konisch mit gerader Querschnittslinie ausgebildet sein, wobei Durchmesser und Steigung des Konus so gewählt sind, dass die sphärische Anlagefläche zumindest linienförmig an der konischen Gegenanlagefläche zur Anlage kommen kann. Die Lagerfläche kann direkt an dem Träger ausgebildet sein, das heiß der Träger selber ist aus dem gewünschten Lagermaterial ausgebildet. Alternativ ist es möglich, den Träger als separates Bauteil vorzusehen, an welchem zumindest ein Lagerelement aus einem geeigneten Lagermaterial angeordnet sind, an welchem die eigentliche Lagerfläche ausgebildet ist.

Weiter bevorzugt werden die Anlagefläche und die Gegenanlagefläche zumindest eines Lagerteils, vorzugsweise des rotierenden Lagerteils durch Federkraft in Anlage gehalten. Dies hat den Vorteil, dass auch bei Stillstand der Pumpe die durch relatives Verschwenken von Anlagefläche und Gegenanlagefläche zueinander eingenommene Winkellage der Lagerfläche beibehalten werden kann, da Anlagefläche und Gegenanlagefläche mit einem gewissen Reibschluss in Anlage gehalten werden.

Ferner sind an der Anlagefläche und der Gegenanlagefläche zweckmäßigerweise Eingriffselemente angeordnet, welche zur Drehmomentübertragung miteinander in Eingriff sind. Die Anlagefläche und die Gegenanlagefläche sollen aneinander gleiten, um die Winkellage der Lagerfläche zu verändern. Wie oben beschrieben beinhaltet dies im Wesentlichen ein Verschwenken um zwei zueinander orthogonale Schwenkachsen, welche die Rotationsachse der Antriebswelle kreuzen. Ein Verschwenken bzw. Drehen um die Rotationsachse zwischen Anlagefläche und Gegenanlagefläche ist jedoch unerwünscht, da dies die Bewegung ist, welche im Axiallager zwischen den Lagerflächen der beiden Lagerteile erfolgen soll. Diese sollen rotierend aneinander gleiten. Insofern soll eine Rotation zwischen Anlagefläche und Gegenanlagefläche verhindert werden. Die Eingriffselemente können beispielsweise in Form von Eingriffsvorsprüngen und korrespondierenden Eingriffsnuten ausgebildet sein, wobei die Eingriffsvorsprünge beispielsweise an der Anlagefläche und die Eingriffsnuten in der Gegenanlagefläche ausgebildet sind. Die Eingriffsvorsprünge und Eingriffsnuten erstrecken sich dabei bevorzugt in radialer Richtung, so dass sich die Eingriffsvorsprünge in den Eingriffsnuten beim Verschwenken der Anlagefläche relativ zu der Gegenanlagefläche relativ zueinander bewegen können. Eine Bewegung in Umfangsrichtung relativ zueinander wird jedoch verhindert. So kann ein Drehmoment zwischen Anlagefläche und Gegenanlagefläche durch den formschlüssigen Eingriff der Eingriffselemente gewährleistet werden.

Die Anlagefläche und/oder die Gegenanlagefläche sind bevorzugt aus einen keramischen Material gefertigt. Diese Materialien weisen eine ausreichende Festigkeit und insbesondere Verschleißfestigkeit auf.

Weiter bevorzugt weist eines der Lagerteile eine Lagerfläche auf, welche von mehreren einzelnen Lagerschuhen gebildet ist und das andere Lagerteil weist eine durchgehende Lagerfläche auf, auf welcher die Lagerschuhe gleiten. So kann beispielsweise der feststehende bzw. stationäre Lagerteil mehrere einzelne Lagerschuhe aufweisen, während der rotierende Lagerteil eine ringförmige durchgehende Lagerfläche aufweist, welche vorzugsweise als einstückiges Bauteil gefertigt ist. Dabei können in der durchgehenden Lagerfläche aber Nuten oder Ausnehmungen in der Oberfläche vorgesehen sein, um die Zufuhr des von der Pumpe zu fördernden Fluids zur Schmierung des Lagers zu gewährleisten. Die einzelnen Lagerschuhe an dem anderen Lagerteil können eine gewisse Beweglichkeit aufweisen, so dass sie sich mit ihren Obenflächen ebenfalls relativ zu der gegenüberliegenden Lagerfläche ausrichten können, so dass die Lagerflächen plan aneinander zur Anlage kommen können. Zwischen den einzelnen Lagerschuhen können Freiräume bzw. Spalte verbleiben, welche ebenfalls der Zufuhr des zu fördernden Fluids bzw. der zu fördernden Flüssigkeit zur Schmierung des Lagers dienen. Auch können in den Lagerflächen an den Lagerschuhen entsprechende Ausnehmungen oder Nuten zur Schmierstoffzufuhr vorgesehen sein.

Wie oben beschrieben ist das Kreiselpumpenaggregat besonders bevorzugt zur Förderung eines Kältemittels ausgebildet. Gerade bei einem solchen Kreiselpumpenaggregat ist es wünschenswert das Axiallager auf der Druckseite der Kreiselpumpe, d.h. im axialen Mittelbereich der Welle anzuordnen, wobei die Qualität der Lagerung durch die erfindungsgemäße Ausgestaltung des Axiallagers in der oben beschriebenen Weise verbessert wird. Ein solches Kältemittel- Kreiselpumpenaggregat wird beispielsweise zur Zirkulation des Kältemittels in einer Kühl- oder Klimaanlage eingesetzt. Bevorzugt ist das Kreiselpumpenaggregat mehrstufig mit einer Mehrzahl von in Reihe geschalteten Laufrädern zur Druckerhöhung ausgebildet.

Der Antriebsmotor des Kreiselpumpenaggregates ist bevorzugt als Spaltrohrmotor, d.h. als nasslaufender elektrischer Antriebsmotor ausgebildet. Dies hat den Vorteil, dass die Zahl der erforderlichen Dichtungen gering gehalten werden kann. Insbesondere sind keine Wellendichtungen erforderlich, so dass ein Leckagerisiko, was gerade bei der Förderung von ggf. giftigen oder umweltschädlichen Kältemitteln problematisch ist, verringert ist.

Gemäß einer bevorzugten Ausführungsform ist vorgesehen, dass die Kreiselpumpe von einem rohrförmigen Behälter umgeben ist. Dieser rohrförmige Behälter umgibt die Kreiselpumpe als zusätzliche Wandung, vorzugsweise radial beabstandet zu den ersten Gehäusewandungen der einzelnen Pumpenstufen der Kreiselpumpe. Der rohrförmige Behälter ist mit einem ersten Axialende, an welchem er offen ausgebildet ist, dichtend mit dem Gehäuse des Antriebsmotors verbunden. An seinem entgegengesetzten axialen Ende ist der rohrförmige Behälter geschlossen ausgebildet, so dass er insgesamt eine topfförmige Form aufweist. Der Behälter schließt das gesamte System nach außen ab und nimmt die durch den Systemdruck des Fluids in seinem Inneren erzeugten Kräfte auf. Zur Abdichtung ist nur eine einzige Dichtung im Bereich der Schnittstelle zu dem Motorgehäuse hin erforderlich. Insofern wird die Gefahr von Leckagen durch die Reduzierung der abzudichtenden Schnittstellen reduziert. Darüber hinaus müssen die Gehäuseteile der einzelnen Pumpenstufen der Kreiselpumpe nicht derart druckfest ausgebildet werden, dass sie den Systemdruck aufnehmen können, diese Gehäuseteile müssen lediglich den Differenzdruck, welcher von der Kreiselpumpe bzw. deren einzelnen Pumpenstufen erzeugt wird, standhalten. Insofern kann auf teuere Gussteile in diesem Bereich verzichtet werden. Da der ganze, die Kreiselpumpe umgebende Behälter vorzugsweise mit dem zu fördernden Kältemittel gefüllt ist, herrscht der Systemdruck dann sowohl innerhalb als auch außerhalb des Gehäuses der Pumpenstufen des Kreiselpumpenaggregates. Darüber hinaus müssen auch keine höheren Anforderungen an die Dichtungen im Inneren der Kreiselpumpe gestellt werden, da diese die Kreiselpumpe nicht hermetisch nach außen zur Umgebung hin abdichten müssen. Diese Funktion übernimmt der umgebende Behälter.

Bevorzugt weist der rohrförmige Behälter einen Saug- und Druckanschluss auf. Neben dem geöffneten axialen Stirnende, welches mit dem Motorgehäuse verbunden wird, sind diese beiden Öffnungen bevorzugt die einzigen weiteren Öffnungen in dem Behälter, so dass der Behälter nach außen relativ leicht in diesem Fall an nur drei Schnittstellen abzudichten ist. Es ist jedoch auch denkbar, das je nach Anlage, in welche der Behälter einzubauen ist, möglicherweise auch mehr als ein Sauganschluss und/oder mehr als ein Druckanschluss an dem Behälter vorgesehen sein kann. Im Inneren des Behälters ist der Sauganschluss mit der Saugseite der Kreiselpumpe und der Druckanschluss mit der Druckseite der Kreiselpumpe verbunden.

Bevorzugt erstrecken sich der Sauganschluss und/oder Druckanschluss in radialer Richtung von dem Behälter weg, sie bilden somit Anschlussstutzen zur Verbindung mit anschließenden Leitungen.

Der Behälter weist im Übrigen vorzugsweise eine geschlossene Wandung auf. Bevorzugt ist die Wandung einteilig oder einstückig ausgebildet, gegebenenfalls durch Verschweißen mehrerer Bauteile. Der so gebildete geschlossene Behälter weist neben der offenen Stirnseite zur Anbindung des Motors und den Saug- und Druckanschlüssen somit bevorzugt keine weiteren Öffnungen oder abzudichtenden Schnittstellen auf, wodurch die Leckagegefahr minimiert wird.

Der Sauganschluss und/oder der Druckanschluss können mit Anschlussflanschen zur Verbindung mit sich anschließenden Rohrleitungen versehen sein. Alternativ können der Sauganschluss und/oder der Druckanschluss zum direkten Verschweißen mit Anschlussleitungen ausgebildet sein. Wenn sich anschließende Leitungen direkt mit dem Sauganschluss und/oder dem Druckanschluss verschweißt werden, hat dies den Vorteil, dass an diesen Anschlüssen keine weiteren Dichtungen vorgesehen werden müssen, wodurch die Leckagegefahr weiter minimiert wird. In dem Fall, dass Anschlussleitungen direkt an Sauganschluss und Druckanschluss angeschweißt sind, verbleibt im Idealfall somit lediglich eine abzudichtende Öffnung an dem Behälter, nämlich die Schnittstelle zu dem Antriebsmotor. Der Sauganschluss und der Druckanschluss können als Anschlussstutzen ausgebildet sein. Alternativ können die Anschlussleitungen auch direkt an die Umfangswandung des Behälters angeschweißt werden.

Weiter bevorzugt weist der Behälter in seinem Inneren eine ringförmige Trennwand auf, welche die Saug- und die Druckseite der Kreiselpumpe voneinander trennt. Diese ringförmige Trennwand erstreckt sich bevorzugt als ringförmiger Vorsprung von der Innenwandung radial nach innen. Die ringförmige Trennwand ist dabei in axialer Richtung des Behälters gesehen, d. h. in Richtung der Rotationsachse der Kreiselpumpe, vorzugsweise zwischen dem Sauganschluss und dem Druckanschluss in dem Behälter angeordnet. An ihrem Innenumfang ist die ringförmige Trennwand weiter bevorzugt so ausgebildet, das sie mit dem Außenumfang eines Gehäuseteiles der im Inneren des Behälters angeordneten Kreiselpumpe dichtend zur Anlage kommt. Hier kann gegebenenfalls eine Dichtung, beispielsweise ein O-Ring vorgesehen sein. Dabei ist die Trennwand in axialer Richtung bevorzugt so platziert, dass die Kreiselpumpe mit ihrem saugseitigen Axialende in den Innenumfang der Trennwand eingreift und mit dem saugseitigen Axialende dichtend an der Trennwand anliegt. An der der Saugwandseite abgewandten Seite der Trennwand ist der Freiraum zwischen Kreiselpumpe und dem umgebenden Behälter vorzugsweise mit dem aus der Kreiselpumpen austretenden Fluid gefüllt. Dieser Raum ist dann bevorzugt mit dem Druckanschluss verbunden. Bevorzugt verbleibt somit ein Freiraum zwischen der Kreiselpumpe und dem Innenumfang des Behälters, d. h. der Behälter weist einen Innendurchmesser auf, welcher größer ist als der Außendurchmesser der Kreiselpumpe.

Die Kreiselpumpe erstreckt sich bevorzugt konzentrisch zu dem Behälter und ist in axialer Richtung, d. h. in Richtung der Längs- bzw. Rotationsachse der Kreiselpumpe von der offenen Stirnseite her in den Behälter eingeschoben. Dabei ist der Behälter mit dem Motorgehäuse des Antriebsmotors bevorzugt lösbar verbunden, beispielsweise durch eine verschraubte Flanschverbindung. Dies ermöglicht es, dass der Behälter und das Motorgehäuse voneinander getrennt werden können, wobei dann der Antriebsmotor mit dem Kreiselpumpenaggregat von dem Behälter abgenommen bzw. aus diesem herausgezogen werden können, beispielsweise um die Kreiselpumpe oder den Antriebsmotor zu warten oder auszutauschen. Insofern ist eine sehr einfache Wartung und gegebenenfalls Reparatur möglich, da sämtliche Anschlussleitungen zur Verbindung des Kreiselpumpenaggregates mit übrigen Teilen eines Kältesystems nicht gelöst werden müssen, sondern fest mit dem Behälter verbunden verbleiben können.

Wenn der Antriebsmotor als Spaltrohrmotor ausgebildet ist, Das heißt ist das Spaltrohr weiter bevorzugt so angeordnet, dass es direkt mit dem offenen Axialende des Behälters abgedichtet ist bzw. dicht mit einem Flansch zur Verbindung des Antriebsmotors mit dem Behälter verbunden ist. Beispielsweise kann das Spaltrohr mit einem solchen Flansch am Antriebsmotor bzw. Motorgehäuse verschweißt sein. Dies hat den Vorteil, dass auch im Antriebsmotor keine weiteren Dichtungen zur Abdichtung des mit Kältemittel gefüllten und unter Systemdruck stehenden Innenraumes erforderlich sind. Im Idealfall ist somit nur die einzige Dichtung zwischen Motorgehäuse bzw. Antriebsmotor auf der einen Seite und dem Behälter auf der anderen Seite erforderlich. Insbesondere sind bei der Ausgestaltung als Spaltrohrmotor keine Wellendichtungen erforderlich, welche besonders leckagegefährdet sind.

Wie vorangehend beschrieben ist der Behälter vorzugsweise druckfest für den Systemdruck des zufördernden Kältemittels ausgebildet. Besonders bevorzugt ist der Behälter daher so ausgebildet, das er einem Systemdruck > 25, weiter bevorzugt >30 und insbesondere > 50 oder 60 bar Innendruck standhält.

Nachfolgend wird die Erfindung beispielhaft anhand der beigefügten Figuren beschrieben. In diesen zeigt:
- Figur 1 -: eine Schnittansicht eines Kreiselpumpenaggregates für die Förderung eines Kältemittels gemäß einer ersten Ausführungsform,
- Figur 2 -: eine Schnittansicht eines Kreiselpumpenaggregates für die Förderung eines Kältemittels gemäß einer zweiten Ausführungsform,

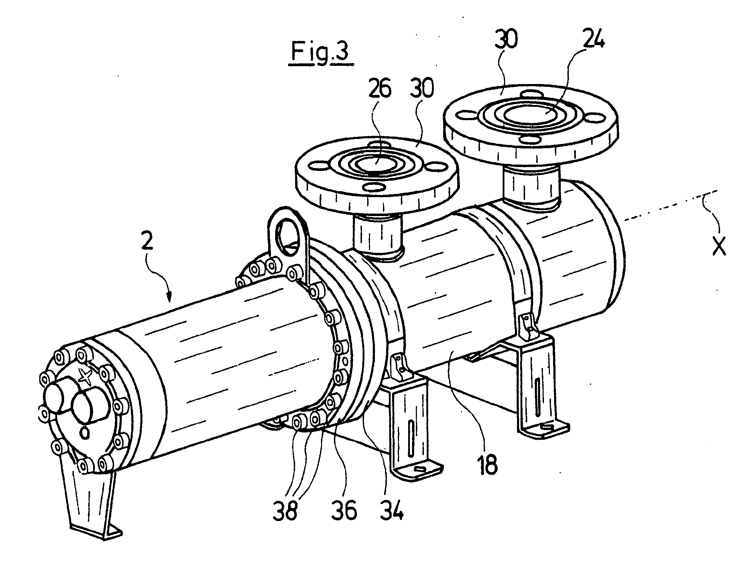

- Figur 3 -: eine perspektivische Gesamtansicht des Kreisel- pumpenaggregates gemäß Figur 1,
- Figur 4 -: in einer perspektivischen Ansicht das Kreiselpum- penaggregat gemäß Figur 3 im geöffneten Zu - stand,
- Figur 5 -: vergrößert die Ausgestaltung des Axiallagers in den Kreiselpumpen gemäß den Figuren 1 und 2,
- Figur 6 -: in einer perspektivischen Explosionsansicht den ers- ten rotierenden Lagerteil des Axiallagers gemäß Figur 5,
- Figur 7 -: eine perspektivische Explosionsansicht des rotierenden Lagerteils gemäß Figur 6 in anderer axialer Richtung gesehen,
- Figur 8 -: eine perspektivische Explosionsansicht des festste- henden Lagerteils des Axiallagers gemäß Figur 5 und
- Figur 9 -: eine perspektivische Explosionsansicht des festste- henden Lagerteils gemäß Figur 8 in anderer axialer Richtung gesehen.

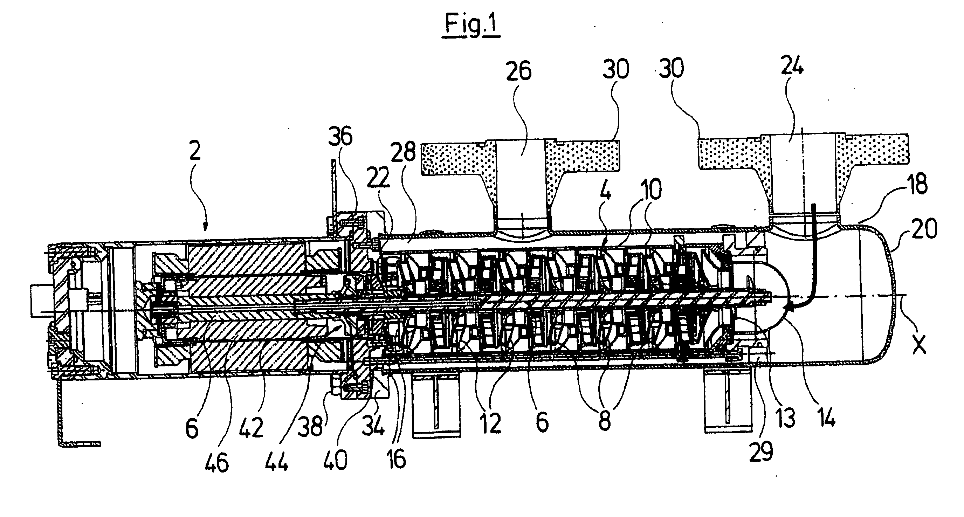

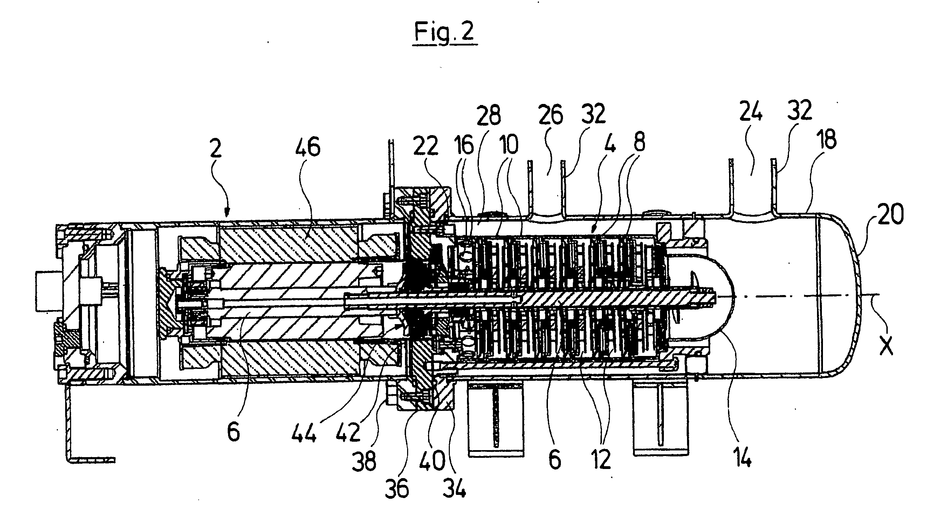

Die in den Figuren 1 und 2 gezeigten Kreiselpumpenaggregate sind speziell zur Förderung von Kältemitteln ausgebildet und weisen an einem Axialende einen Antriebsmotor 2 auf, an welchen axialseitig, d.h. in Richtung der Rotationsachse X eine Kreiselpumpe 4 angesetzt ist. Die Kreiselpumpe 4 ist mehrstufig ausgebildet, d.h. sie weist eine Vielzahl von in axialer Richtung hintereinander an der Antriebswelle 6 angeordneten Laufrädern 8 auf. Die Laufräder 8 sind wie von herkömmlichen Kreiselpumpen her bekannt von Gehäuseteilen 10 mit innenliegenden Leitapparaten 12 umgeben. Die Leitapparate 12 dienen der Strömungsführung von einem Laufrad 8 zum nächsten und zur Umlenkung der radial aus dem Laufrad 8 austretenden Strömung in axialer Richtung.

Die Gehäuseteile 10 sind in axialer Richtung X aneinander gesetzt, so dass sie gemeinsam ein rohrförmiges Gehäuse bilden. Am ersten Axialende 13 der Kreiselpumpe 4, welches die Saugseite bildet, ist ein Filter 14 angeordnet, durch welchen das zu fördernde Kältemittel von der Kreiselpumpe 4 angesaugt wird und in diese eintritt. Am entgegengesetzten druckseitigen Axialende sind in dem letzten Gehäuseteil 10 umfängliche Austrittsöffnungen 16 angeordnet, durch welche das von der Kreiselpumpe 4 geförderte Kältemittel radial aus der Kreiselpumpe 4 austritt.

Bei der Förderung von Kältemitteln besteht die Problematik, dass dieses üblicherweise unter einem hohen Systemdruck gefördert wird. Der Gesamtsystemdruck eines Kältesystems kann mehr als 50 bar betragen, während der Differenzdruck zwischen Saug- und Druckseite der Kreiselpumpe 4 wesentlich geringer sein kann, beispielsweise im Bereich zwischen 2,5 und 6 bar liegen kann. Der hohe Systemdruck erfordert es jedoch, dass das Kreiselpumpenaggregat ausreichend druckfest auszubilden. Insbesondere bei der Förderung von Kältemitteln sind dabei Leckagen unbedingt zu vermeiden, da derartige Kältemittel häufig teuer, umweltschädlich und/oder giftig sind, so dass deren Austritt in die Umgebung unbedingt zu vermeiden ist.

Um das Kreiselpumpenaggregat ausreichend dicht und druckfest auszubilden, ist die Kreiselpumpe 4 in einem umgebenden druckfesten Behälter 18 angeordnet. Der Behälter 18 ist rohrförmig ausgebildet und an seinem dem Antriebsmotor 2 abgewandten Ende 20 geschlossen. So wird insgesamt eine topfförmige Behälterform erreicht. Der Behälter weist lediglich drei Öffnungen auf. Dies sind eine Öffnung 22, welche durch die dem axialen Ende 20 abgewandte Stirnseite des Behälters 18 gebildet wird, sowie eine Saugöffnung 24 und eine Drucköffnung 26. Im Übrigen ist die Behälterwandung vollständig geschlossen ausgebildet. Der Behälter 18 kann in den übrigen Bereichen insbesondere druckdicht verschweißt sein. Durch die Saugöffnung 24 wird das zu fördernde Kältemittel angesaugt und tritt dann durch den Filter 14 in die Kreiselpumpe 4 ein. Das von den Stufen der Kreiselpumpe geförderte Kältemittel tritt dann am entgegengesetzten Axialende der Kreiselpumpe 4 durch die Austrittsöffnungen 16 aus. Anschließend fließt es durch den Spalt 28 zwischen der Außenseite der Gehäuseteile 10 und dem Innenumfang des Behälters 18 zu der Drucköffnung 26, durch welche es dann aus dem Kreiselpumpenaggregat austritt. Zur Ausbildung des Spaltes 28 ist der Innendurchmesser des Behälters 18, welcher bevorzugt einen kreisförmigen Querschnitt bezüglich der Rotationsachse X aufweist, größer ausgebildet als der Außendurchmesser der Gehäuseteile 10.

Im Inneren des Behälters 18 ist an der Innenwandung ein Ring 29 angeordnet, welcher eine Trennwand in dem Spalt 28 bildet und die Druckseite von der Saugseite trennt. Der Ring 29 liegt dichtend am Axialende 13 des aus den Gehäuseteilen 10 gebildeten rohrförmigen Gehäuses an. Hierzu ist ein O-Ring zur Dichtung vorgesehen. So wird verhindert, dass das Fluid von der Druckseite im Spalt 28 in die Saugseite und die Öffnung am Axialende 13 der Kreiselpumpe 4 einströmt. Der Ring 29 ist mit der Behälterwandung fest und dicht verbunden, insbesondere verschweißt.

Bei dem in Figur 1 gezeigten Beispiel sind die Saugöffnung 24 und die Drucköffnung 26 von Flanschen 30 umgeben, mittels welcher das Kreiselpumpenaggregat an angrenzende Anschlussleitungen angeschlossen werden kann. Dabei wird zwischen die Flansche 30 und an diesen anliegenden Gegenanschlussflanschen (hier nicht gezeigt) jeweils ein Dichtungselement zur Abdichtung zwischengelegt. Um eine solche Abdichtung zu vermeiden, ist es auch möglich, den Behälter 18 direkt mit anschließenden Rohrleitungen zu verschweißen. Hierzu ist die Ausführungsform gemäß Figur 2 vorgesehen, bei welcher die Saugöffnung 24 und die Drucköffnung 26 lediglich durch sich radial von dem Behälter 18 wegerstreckende rohrförmige Stutzen 32 gebildet werden, welche direkt mit sich anschließenden Leitungen verschweißt werden können. Alternativ wäre es auch denkbar, sich anschließende Leitungen direkt mit dem Behälter 18 zu verschweißen. Auf diese Weise werden abzudichtende Anschlussstellen vermieden, welche ein potentielles Leckagerisiko bilden.

Umgebend die Öffnung 20 ist am Axialende des Behälters 18 ein Flansch 34 angeordnet, welcher mit der Wand des Behälters 18 umfänglich verschweißt ist. Dieser Flansch 34 dient der Verbindung mit dem Antriebsmotor 2, welcher hierzu an seinem der Kreiselpumpe 4 zugewandten Axialende einen Gegenflansch 36 aufweist, welcher mittels Schrauben 38 mit dem Flansch 34 verschraubt ist. Zwischen Flansch 34 und Gegenflansch 36 ist zur Abdichtung ein O-Ring 40 angeordnet.

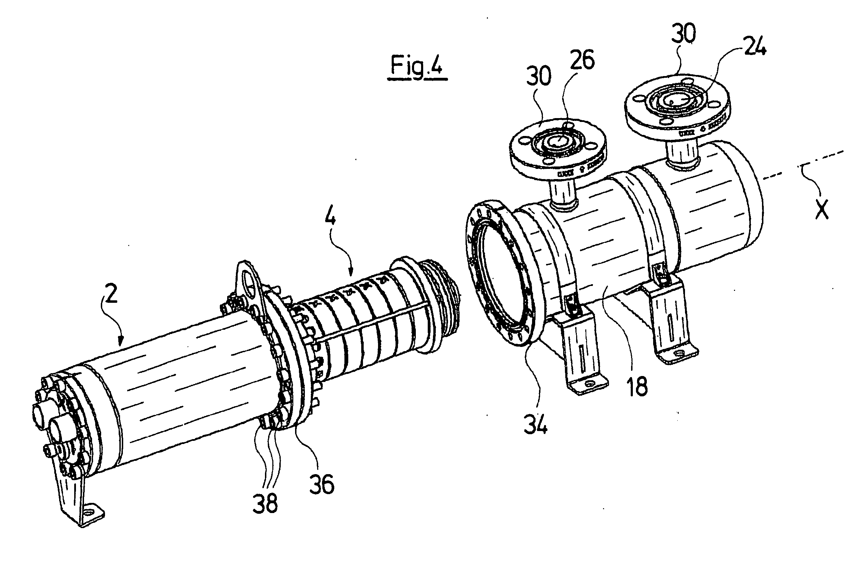

Der Antriebsmotor 2 ist als Spaltrohrmotor ausgebildet, wobei sein Spaltrohr 42 an seinem offenen der Kreiselpumpe 4 zugewandten Ende dichtend mit dem Gegenflansch 36 verbunden ist, vorzugsweise mit diesem verschweißt ist. Durch diese Ausgestaltung wird erreicht, dass das gesamte Kreiselpumpenaggregat außer den Saugöffnungen 24 und 26 nur eine Schnittstelle aufweist, an welcher der Innenraum nach außen abzudichten ist, nämlich zwischen dem Flansch 34 und dem Gegenflansch 36 im Bereich der Verbindung zwischen Antriebsmotor 2 und Behälter 18. In dem Fall, dass auch die Sauganschlüsse 24 und 26 wie bei dem Ausführungsbeispiel gemäß Figur 2 durch Verschweißen mit sich anschließenden Rohrleitungen verbunden sind, ist somit nur eine einzige Dichtung zur Abdichtung des Druckraumes nach außen erforderlich. Dadurch wird das Leckagerisiko minimiert. Darüber hinaus ist es zu Wartungszwecken sehr leicht möglich, die gesamte Kreiselpumpe 4, wie in Figur 4 gezeigt, in axialer Richtung X nach Lösen der Schrauben 38 aus dem Behälter 18 zu entnehmen. So kann auch die gesamte Kreiselpumpe 4 einschließlich Antriebsmotor 2 sehr leicht ausgetauscht werden.

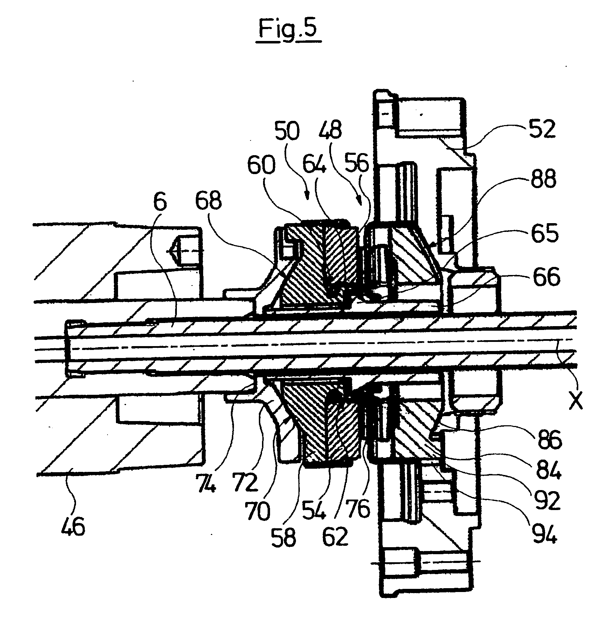

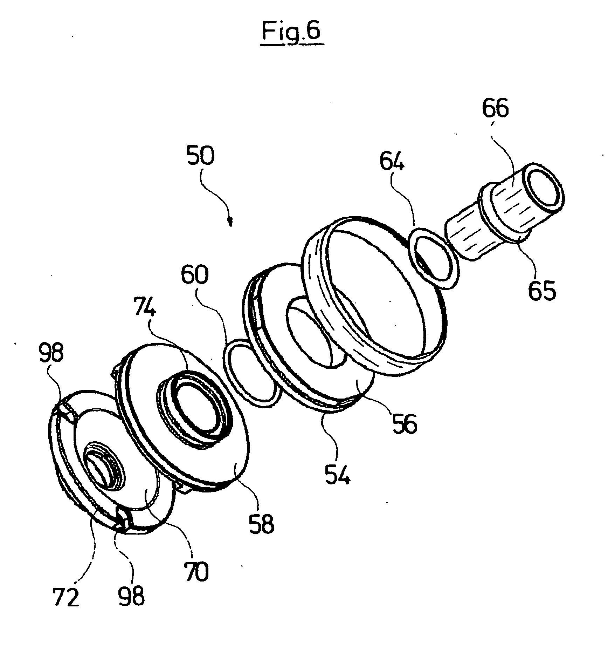

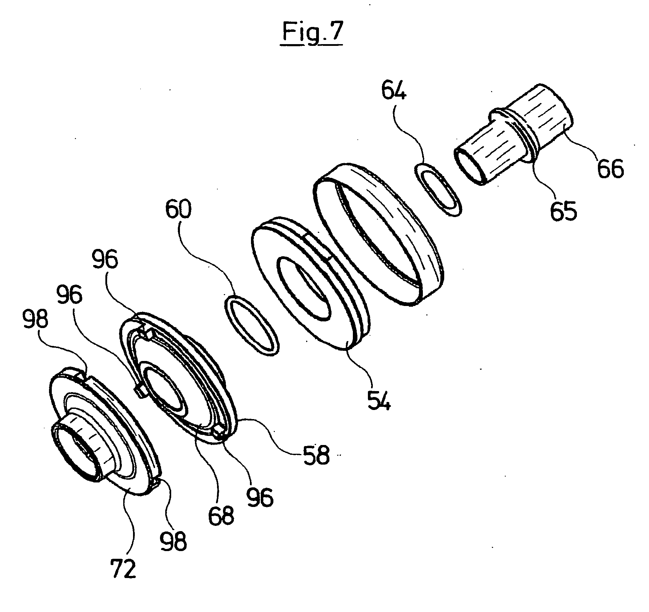

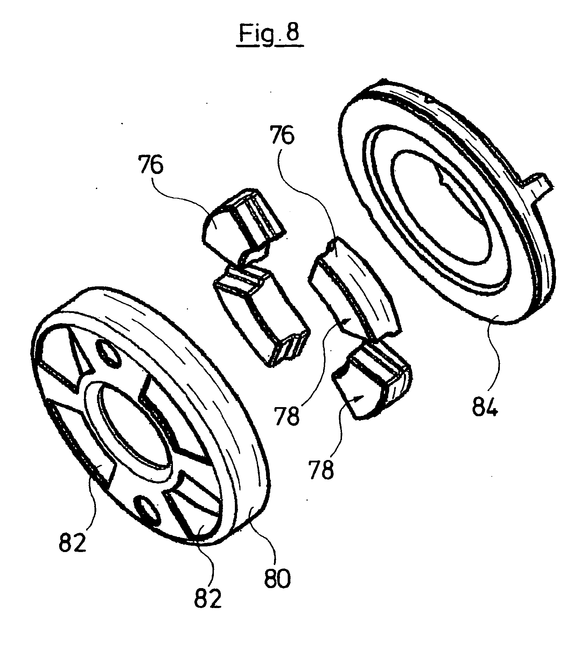

Eine weitere erfindungsgemäße Besonderheit des gezeigten Kreiselpumpenaggregates liegt in der Ausgestaltung des Axiallagers 44, welche nachfolgend anhand der Figuren 5 - 9 im Einzelnen beschrieben wird.

Wie in Figur 1 und 2 zu erkennen ist, ist das Axiallager 44 im Mittelbereich der Antriebswelle 6 angeordnet, d.h. es ist von den beiden Axialenden der Antriebswelle 6 beabstandet und näher zur axialen Mitte der Antriebswelle 6 gelegen als zu deren Axialenden. Das Axiallager 44 liegt somit zwischen der Kreiselpumpe 4 und dem Rotor 46 des Antriebsmotors 2, welcher ebenfalls auf der Antriebswelle 6 befestigt ist. Im hier gezeigten Beispiel ist die Antriebswelle 6 dazu zweiteilig ausgebildet, der Teil der Welle im Rotor 2 ist getrennt von dem Teil der Antriebswelle 6 in der Kreiselpumpe 4. Beide Teile sind drehfest miteinander verbunden. Es ist jedoch zu verstehen, dass hier auch eine einteilige Antriebswelle 6 Verwendung finden könnte.

Die Lage des Axiallagers 44 an dem Antriebsmotor 2 zugewandten Ende der Kreiselpumpe 4 hat den Vorteil , dass das Axiallager 44, welches durch das geförderte Kältemittel geschmiert wird, in dem Bereich der Kreiselpumpe gelegen ist, in dem der höchste Druck des Kältemittels herrscht. Gleichzeitig ist das Axiallager aber noch vom Rotor 46 des Antriebsmotors 2 beabstandet, so dass in diesem Bereich das geförderte Kältemittel noch nicht übermäßig durch die Abwärme des Antriebsmotors 2 erwärmt wird. Das heißt, dass das Axiallager 44 gerade in dem Bereich liegt, in dem das Kältemittel aufgrund des hohen Druckes und der noch nicht erfolgten Erwärmung durch den Antriebsmotor nicht verdampft, so dass hier eine zuverlässige Flüssigkeitsschmierung des Axiallagers 44 gewährleistet bleibt.

In dem Mittelbereich der Antriebswelle 6, in welchem das Axiallager 44 angeordnet ist, besteht üblicherweise das Problem, dass die Teile eines Axiallagers aufgrund möglicher radialer Auslenkungen der Antriebswelle zum Taumeln neigen. Erfindungsgemäß wird dies dadurch vermieden, dass das Axiallager selbstausrichtend ausgebildet ist. Das Axiallager besteht aus zwei Lagerteilen 48 und 50, nämlich einem stationären Lagerteil 48 und einem rotierenden Lagerteil 50. Der rotierende Lagerteil 50 ist drehfest mit der Welle 6 verbunden, während der stationäre Lagerteil 48 drehfest in einem mit dem Gegenflansch 36 verschraubten Gehäuseteil 52 gelegen ist. Sowohl der stationäre Lagerteil 48 als auch der rotierende Lagerteil 50 sind selbstausrichtend ausgebildet.

Der rotierende Lagerteil 50 weist ein ringförmiges Lagerelement 54 aus einem geeigneten Lagermaterial, beispielsweise einem keramischen Material auf. An dem Lagerelement 54 ist an einer Axialseite bezogen auf die Rotationsachse X eine erste Lagerfläche 56 ausgebildet. Das Lagerelement 54 wird auf einem Träger 58 gehalten, wobei es über einen O-Ring 60 zentriert wird. Der O-Ring 60 ist dabei umfänglich eines Vorsprunges 62 des Trägers 58 angeordnet, welcher in den Innenumfang des ringförmigen Lagerelementes 54 eingreift, so dass der O-Ring 60 am Innenumfang des Lagerelementes 54 zur Anlage kommt. Mit der der Lagerfläche 56 abgewandten axialen Rückseite liegt das Lagerelement 54 plan an dem Träger 58 an. Der Träger 58 stützt sich über eine wellenförmige Federscheibe 64 an einer radial ausragenden Schulter 65 einer Hülse 66 ab, wobei die Hülse 66 an der Antriebswelle 6 fixiert ist.

Die dem Lagerelement 54 abgewandte rückseitige Fläche des Trägers 58 ist als sphärische Anlagefläche 68 ausgebildet. Das heißt die Anlagefläche 68 hat die Form eines ringförmigen Kugelabschnittes, wobei der Mittelpunkt dieser Kugel auf der Rotationsachse X liegt. Die Anlagefläche 68 liegt an einer konischen, in diesem Fall korrespondierend sphärisch geformten Gegenanlagefläche 70 an, welche in einem Stützkörper 72 ausgebildet ist. Die Gegenanlagefläche 70 weist in diesem Fall somit dieselbe Krümmung, d.h. denselben Radius wie die Anlagefläche 68 auf. Dabei sind die Anlagefläche 68 konvex und die Gegenanlagefläche 70 konkav geformt. Der Stützkörper 42 stützt sich wiederum auf einem ringförmigen Vorsprung 74 and der Antriebswelle 6 ab. Im hier gezeigten Beispiel wird der Vorsprung 74 vom axialen Ende des Wellenabschnittes der Antriebswelle 6 gebildet, welcher die Rotorwelle des Rotors 46 bildet. Dabei ist der Vorsprung 74 der Schulter 65 entgegengesetzt gerichtet, so dass der Stützkörper 72 und der Träger 58 durch die Federwirkung der Federscheibe 64 zwischen der Schulter 65 und dem Vorsprung 74 geklemmt werden und die Anlagefläche 68 und die Gegenanlagefläche 70 durch diese Federkraft in Anlage gehalten werden.

Aufgrund der sphärischen Form der Anlagefläche 78 und der Gegenanlagefläche 70 ist es dem Träger X möglich, um den Mittelpunkt der Kugelform der Anlagefläche 68 und der Gegenanlagefläche 70 zu verschwenken, so dass die Winkellage der Lagerfläche 56 bezüglich der Rotationsachse X um zwei zueinander orthogonale und zu der Rotationsachse X orthogonale Achsen veränderbar ist. Auf diese Weise kann die Lagerfläche 56 sich selbsttätig frei in ihrer Winkellage zur Rotationsachse X ausrichten, wobei die Anlagefläche 68 auf der Gegenanlagefläche 70 gleitet. Durch die Federwirkung der Federscheibe 64 wird sichergestellt, dass auch bei Stillstand der Pumpe, wenn die Axialkraft, welche im Betrieb auf das Axiallager wirkt, nicht mehr vorhanden ist, die Anlagefläche 68 und die Gegenanlagefläche 70 aneinander fixiert werden, so dass eine sich zuvor selbsttätig eingestellte Winkellage der Lagerfläche 56 auch im Stillstand der Pumpe beibehalten wird.

Auch der stationäre Lagerteil 48 ist selbstausrichtend ausgebildet. Der stationäre Lagerteil 48 weist mehrere Lagerschuhe 76 auf, deren axiale Oberflächen zweite Lagerflächen 78 bilden, welche gleitend mit der ersten Lagerfläche 56 in Anlage sind. Die Lagerschuhe 76 sind in einem Haltering 80 fixiert, welcher Ausnehmungen 82 aufweist, welche der Außenkontur der Lagerschuhe 76 entsprechen. So können die Lagerschuhe 76 sich durch die Ausnehmungen 82 hindurch erstrecken und werden in radialer und umfänglicher Richtung in dem Haltering 80 fixiert. An der den Lagerflächen 78 abgewandten Axialseite liegen die Lagerschuhe 76 an einem Träger 84 an. Der Träger 84 weist an seiner den Lagerschuhen 76 abgewandten Axialseite eine sphärische Anlagefläche 86 auf. Diese sphärische Anlagefläche 86 bildet einen ringförmigen Abschnitt bzw. Ausschnitt einer Kugeloberfläche, wobei der Mittelpunkt der Kugel auf der Rotationsachse X gelegen ist. Die Anlagefläche 86 liegt an einer Gegenanlagefläche 88 an, welche in dem Gehäuseteil 52 ausgebildet ist. Die Gegenanlagefläche 88 ist konisch, in diesem Fall korrespondierend sphärisch ausgebildet, d.h. sie weist denselben Krümmungsradius auf und ist um denselben Mittelpunkt gekrümmt wie die Anlagefläche 86. Die Anlagefläche 86 ist dabei konvex gekrümmt, während die Gegenanlagefläche 88 konkav gekrümmt ist. Diese Ausgestaltung ermöglicht es dem Träger 84, um den Mittelpunkt der die Anlagefläche 86 und Gegenanlagefläche 88 definierenden Kugelform zu verschwenken. Somit ist es möglich, dass sich die Lagerflächen 78 an den Lagerschuhen 76 in ihrer Winkellage selbsttätig bezüglich der Rotationsachse X auszurichten. Das heißt die Lagerflächen 78 können um zwei zueinander orthogonale Schwenkachsen, welche sich normal zur Längsachse X, erstrecken in einem bestimmten Winkelbereich frei verschwenken. Auf diese Weise können sich die Lagerflächen 78 immer an die Lagerfläche 56 des rotierenden Lagerteiles plan anlegen, so dass stets ein gleitender Kontakt ohne Taumelbewegung der Lagerflächen gegeben ist.

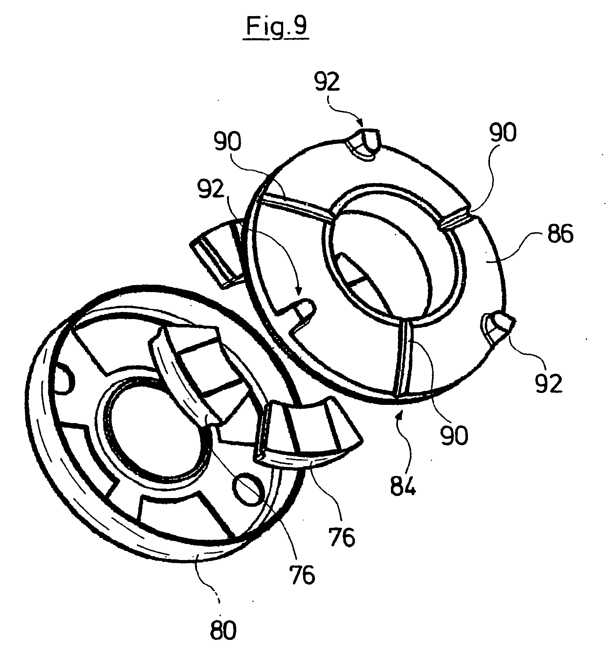

In der Anlagefläche 86 sind, wie in Figur 9 zu erkennen ist, drei gleichmäßig über den Umfang verteilte sich radial erstreckende Nuten 90 ausgebildet, welche die Fluidzirkulation und damit die Schmierung im Axiallager verbessern.

Um den Träger 86 drehfest an dem Gehäuseteil 52 zu halten, sind am Außenumfang der Anlagefläche 86 drei, gleichmäßig über den Umfang verteilte, sich in axialer Richtung erstreckende Eingriffsvorsprünge 92 ausgebildet, welche in korrespondierende Ausnehmungen 94 in dem Gehäuseteil 52 eingreifen. Dabei ist zwischen den Eingriffsvorsprüngen 92 und den Ausnehmungen 94 insbesondere in radialer Richtung soviel Spiel vorgesehen, dass die beschriebene Schwenk- bzw. Ausrichtbewegung zwischen Anlagefläche 86 und der Gegenanlagefläche 88 möglich bleibt.

Entsprechend ist der Träger 58 drehfest an dem Stützkörper 72 gelagert, so dass ein Drehmoment von dem Stützkörper 72 auf den Träger 58 übertragen werden kann. Hierzu sind am Außenumfang der Anlagefläche 68 sich radial erstreckende Eingriffsvorsprünge 96 angeordnet, welche in korrespondierende Ausnehmungen 98 in dem Stützkörper 72 eingreifen. Auch hier ist ausreichend Spiel, insbesondere in radialer Richtung zwischen den Eingriffsvorsprüngen 96 und in den Ausnehmungen 98 vorgesehen, um die Schwenkbewegung der Anlagefläche 68 relativ zu der Gegenanlagefläche 70 weiter möglich zu halten.

Die Anlageflächen 68 und 86 sowie die Gegenanlageflächen 70 und 88 sind vorzugsweise aus einem harten verschleißfesten Material gefertigt, insbesondere können die Träger 58 ggf. das Gehäuseteil 52 sowie der Stützkörper 72 aus einem entsprechenden harten Material beispielsweise Hartmetall oder Keramik gefertigt sein.

### Bezugszeichenliste

| | | |
|---|---|---|
| 2 | - | Antriebsmotor |
| 4 | - | Kreiselpumpe |
| 6 | - | Antriebswelle |
| 8 | - | Laufräder |
| 10 | - | Gehäuseteile |
| 12 | - | Leitapparate |
| 13 | - | Axialende |
| 14 | - | Filter |
| 16 | - | Austrittsöffnungen |
| 18 | - | Behälter |
| 20 | - | axiales Ende |
| 22 | - | Öffnung |
| 24 | - | Saugöffnung |
| 26 | - | Drucköffnung |
| 28 | - | Spalt |
| 29 | - | Ring |
| 30 | - | Flansche |
| 32 | - | Stutzen |
| 34 | - | Flansch |
| 36 | - | Gegenflansch |
| 38 | - | Schrauben |
| 40 | - | O-Ring |
| 42 | - | Spaltrohr |
| 44 | - | Axiallager |
| 46 | - | Rotor |
| 48 | - | stationärer Lagerteil |
| 50 | - | rotierender Lagerteil |
| 52 | - | Gehäuseteil |
| 54 | - | Lagerelement |
| 56 | - | Lagerfläche |
| 58 | - | Träger |
| 60 | - | O-Ring |
| 62 | - | Vorsprung |
| 64 | - | Federscheibe |
| 65 | - | Schulter |
| 66 | - | Hülse |
| 68 | - | Anlagefläche |
| 70 | - | Gegenanlagefläche |
| 72 | - | Stützkörper |
| 74 | - | Vorsprung |
| 76 | - | Lagerschuhe |
| 78 | - | Lagerflächen |
| 80 | - | Haltering |
| 82 | - | Ausnehmungen |
| 84 | - | Träger |
| 86 | - | Anlagefläche |
| 88 | - | Gegenanlagefläche |
| 90 | - | Nuten |
| 92 | - | Eingriffsvorsprünge |
| 94 | - | Ausnehmungen |
| 96 | - | Eingriffsvorsprünge |
| 98 | - | Ausnehmungen |
| X | - | Rotationsachse |

## Patentansprüche

1. Kreiselpumpenaggregat mit zumindest einem Laufrad (8)und einem Axiallager (44) welches einen rotierenden (50) und einen feststehenden (48) Lagerteil aufweist, **dadurch gekennzeichnet, dass** sowohl der rotierende (50) als auch der feststehende (48) Lagerteil derart selbstausrichtend ausgebildet sind, dass eine Lagerfläche (56, 87) jedes Lagerteils (48, 50) zur Ausrichtung in ihrer Winkellage zur Rotationsachse (X) der Antriebswelle (6) in zumindest einem begrenzten Winkelbereich frei schwenkbar ist.

2. Kreiselpumpenaggregat nach Anspruch 1, **dadurch gekennzeichnet, dass** das Axiallager (44) an einer Antriebswelle (6) beabstandet von den axialen Enden der Antriebswelle (6), insbesondere näher zur axialen Mitte der Antriebswelle (6) als zu den axialen Enden gelegen ist.

3. Kreiselpumpenaggregat nach Anspruch 1 oder 2, **dadurch gekennzeichnet, dass** auf der Antriebswelle (6) der Rotor (46) eines elektrischen Antriebsmotors (2) und zumindest ein Laufrad (8) angeordnet ist, wobei das Axiallager (44) in axialer Richtung (X) zwischen dem Rotor und dem zumindest einen Laufrad (8)gelegen ist.

4. Kreiselpumpenaggregat nach einem der vorangehenden Ansprüche, **dadurch gekennzeichnet, dass** das Axiallager (44) an der Druckseite des zumindest einen Laufrades (8) oder einer Anordnung mehrerer Laufräder (8) gelegen ist.

5. Kreiselpumpenaggregat nach einem der vorangehenden Ansprüche, **dadurch gekennzeichnet, dass** das Axiallager (44) als Gleitlager ausgebildet ist.

6. Kreiselpumpenaggregat nach einem der vorangehenden Ansprüche, **dadurch gekennzeichnet, dass** die Lagerfläche (56,78) zumindest eines Lagerteils (48,50) zur Ausrichtung in ihrer Winkellage um zwei zueinander rechtwinklige und sich normal zur Rotationsachse (X) der Antriebswelle (6) erstreckende Achsen schwenkbar ist.

7. Kreiselpumpenaggregat nach einem der vorangehenden Ansprüche, **dadurch gekennzeichnet, dass** die Lagerfläche (56,78) zumindest eines Lagerteils (48,50) an einem Träger (58,84) angebracht oder abgestützt ist, welcher eine der Lagerfläche abgewandte sphärische Anlagefläche (68,86) aufweist, welche gleitend an einer korrespondierenden konischen Gegenanlageflache (70,88)anliegt.

8. Kreiselpumpenaggregat nach Anspruch 7, **dadurch gekennzeichnet, dass** die Anlagefläche und Gegenanlageflöche zumindest eines Lagerteils, vorzugsweise des rotierenden Lagerteils durch Federkraft in Anlage gehalten werden.

9. Kreiselpumpenaggregat nach Anspruch 7 oder 8, **dadurch gekennzeichnet dass** an der Anlagefläche(68,86) und der Gegenanlagefläche (70,88) Eingriffselemente (92,94,96,98) angeordnet sind, welche zur Drehmomentübertragung miteinander in Eingriff sind.

10. Kreiselpumpenaggregat nach einem der Ansprüche 7 bis 9, **dadurch gekennzeichnet, dass** die Anlagefläche (68,86) und/oder die Gegenanlagefläche (70,88) aus einem keramischen Material gefertigt sind.

11. Kreiselpumpenaggregat nach einem der vorangehenden Ansprüche, **dadurch gekennzeichnet, dass** eines der Lagerteile (48) eine Lagerfläche (78) aufweist, welche von mehreren einzelnen Lagerschuhen (76) gebildet ist, und das andere Lagerteil (50) eine durchgenende Lagerfläche (56) aufweist, auf welcher die Lagerschuhe (76)gleiten.

12. Kreiselpumpenaggregat nach einem der vorangehenden Ansprüche, **dadurch gekennzeichnet, dass** es zur Förderung eines Kältemittels ausgebildet ist.

13. Kreiselpumpenaggregat nach einem der vorangehenden Ansprüche **gekennzeichnet durch** einen als Spaltrohrmotor ausgebildeten Antriebsmotor (2).

## Claims

1. A centrifugal pump assembly with at least one impeller (8) and with a thrust bearing (44) which comprises a rotating (50) and a stationary (48) bearing part, **characterised in that** the rotating (50) as well as the stationary (48) bearing part are designed in a self-aligning manner and in a manner such that a bearing surface (56, 78) of each bearing part (48, 50), for the alignment in its angular position to the rotation axis (X) of the drive shaft (6), is freely pivotable at least in a limited angular range.

2. A centrifugal pump assembly according to claim 1, **characterised in that** the thrust bearing (44) is situated on a drive shaft (6) in a manner distanced to the axial ends of the drive shaft (6), in particular closer to the axial middle of the drive shaft (6) than to the axial ends.

3. A centrifugal pump assembly according to claim 1 or 2, **characterised in that** the rotor (46) of an electric drive motor (2) and at least one impeller (8) are arranged on the drive shaft (6), wherein the thrust bearing (44) is situated in the axial direction (X) between the rotor and the at least one impeller (8).

4. A centrifugal pump assembly according to one of the preceding claims, **characterised in that** the thrust bearing (44) is situated on the pressure side of the at least one impeller (8) or of an arrangement of several impellers (8).

5. A centrifugal pump assembly according to one of the preceding claims, **characterised in that** the thrust bearing (44) is designed as a sliding bearing.

6. A centrifugal pump assembly according to one of the preceding claims, **characterised in that** the bearing surface (56, 78) at least of one bearing part (48, 50), for the alignment in its angular position, is pivotable about two axes which are perpendicular to one another and extend normally to the rotation axis (X) of the drive shaft (6).

7. A centrifugal pump assembly according to one of the preceding claims, **characterised in that** the bearing surface (56, 78) at least of one bearing part (48, 50), is attached or supported on a carrier (58, 84) having a spherical contact surface (68, 86) which is away from the bearing surface and which bears on a corresponding conical counter-contact surface (70, 88) in a sliding manner.

8. A centrifugal pump assembly according to claim 7, **characterised in that** the contact surface and counter-contact surface at least of one bearing part, preferably of the rotating bearing part, are held in bearing contact by way of spring force.

9. A centrifugal pump assembly according to claim 7 or 8, **characterised in that** engagement elements (92, 94, 96, 98) are arranged on the contact surface (68, 86) and on the counter-contact surface (70, 88), and are engaged to one another for torque transmission.

10. A centrifugal pump assembly according to one of the claims 7 to 9, **characterised in that** the contact surface (68, 86) and/or the counter-contact surface (70, 88) are manufactured of a ceramic material.

11. A centrifugal pump assembly according to one of the preceding claims, **characterised in that** one of the bearing parts (48) has a bearing surface (78) which is formed by several individual bearing shoes (76), and the other bearing part (50) has a continuous bearing surface (56), on which the bearing shoes (76) slide.

12. A centrifugal pump assembly according to one of the preceding claims, **characterised in that** it is designed for delivering a refrigerant.

13. A centrifugal pump assembly according to one of the preceding claims, **characterised by** a drive motor (2) designed as a canned motor.

## Revendications

1. Groupe pompe centrifuge comprenant au moins une roue à aubes (8) et un palier axial (44) qui présente une partie de palier rotative (50) et une partie de palier fixe (48), **caractérisé en ce qu'**aussi bien la partie de palier rotative (50) que la partie de palier fixe (48) sont auto-alignées, de sorte qu'une surface d'appui (56, 78) de chaque partie de palier (48, 50) peut pivoter librement, au moins dans une plage angulaire limitée, pour assurer l'alignement dans sa position angulaire par rapport à l'axe de rotation (X) de l'arbre d'entraînement (6).

2. Groupe pompe centrifuge selon la revendication 1, **caractérisé en ce que** le palier axial (44) est monté sur un arbre d'entraînement (6) à distance des extrémités axiales de l'arbre d'entraînement (6), en particulier plus près du milieu axial de l'arbre d'entraînement (6) que des extrémités axiales.

3. Groupe pompe centrifuge selon la revendication 1 ou 2, **caractérisé en ce que** le rotor (46) d'un moteur électrique d'entraînement (2) et au moins une roue à aubes (8) sont montés sur l'arbre d'entraînement (6), le palier axial (44) étant placé entre le rotor et la roue à aubes (8), au moins au nombre de une, dans la direction axiale (X).

4. Groupe pompe centrifuge selon l'une des revendications précédentes, **caractérisé en ce que** le palier axial (44) est monté sur le côté pression de la roue à aubes (8), au moins au nombre de une, ou d'un ensemble de plusieurs roues à aubes (8).

5. Groupe pompe centrifuge selon l'une des revendications précédentes, **caractérisé en ce que** le palier axial (44) est constitué par un palier lisse.

6. Groupe pompe centrifuge selon l'une des revendications précédentes, **caractérisé en ce que**, pour l'alignement dans sa position angulaire, la surface d'appui (56, 78) d'au moins une partie de palier (48, 50) peut pivoter autour de deux axes perpendiculaires entre eux qui s'étendent perpendiculairement à l'axe de rotation (X) de l'arbre d'entraînement (6).

7. Groupe pompe centrifuge selon l'une des revendications précédentes, **caractérisé en ce que** la surface d'appui (56, 78) d'au moins une partie de palier (48, 50) est prévue sur, ou appuyée contre, un support (58, 84) qui présente une surface de contact sphérique (68, 86) éloignée de la surface d'appui et qui est en contact glissant avec une contre-surface d'appui conique correspondante (70, 88).

8. Groupe pompe centrifuge selon la revendication 7, **caractérisé en ce que** la surface de contact et la contre-surface de contact d'au moins une partie de palier, de préférence de la partie de palier rotative, sont maintenues en contact par une force élastique.

9. Groupe pompe centrifuge selon la revendication 7 ou 8, **caractérisé en ce que** sur la surface de contact (68, 86) et sur la contre-surface de contact (70, 88) sont prévus des éléments de prise (92, 94, 96, 98) qui sont en prise entre eux pour la transmission du couple.

10. Groupe pompe centrifuge selon l'une des revendications 7 à 9, **caractérisé en ce que** la surface de contact (68,86) et/ou la contre-surface de contact (70, 88) sont fabriquées dans un matériau céramique.

11. Groupe pompe centrifuge selon l'une des revendications précédentes, **caractérisé en ce qu'**une des parties de palier (48) présente une surface d'appui (78) qui est formée de plusieurs patins de palier distincts (76) et **en ce que** l'autre partie de palier (50) présente une surface d'appui ininterrompue (56) sur laquelle les patins de palier (76) glissent.

12. Groupe pompe centrifuge selon l'une des revendications précédentes, **caractérisé en ce qu'**il est conçu pour le transport d'un fluide frigorigène.

13. Groupe pompe centrifuge selon l'une des revendications précédentes, **caractérisé par** un moteur d'entraînement (2) constitué par un moteur à gaine.
